# FASCICULE DE BREVET EUROPEEN

(11) **EP 3 177 495 B1**
(45) Date de publication et mention de la délivrance du brevet: **01.01.2020**
(21) Numéro de dépôt: 15756202.6
(22) Date de dépôt: 28.07.2015
(51) Int. Cl.: B60V 1/04, B60V 3/06

(54) **VÉHICULE AMPHIBIE**
AMPHIBIENFAHRZEUG
AMPHIBIOUS VEHICLE

(30) Priorité: 06.08.2014 FR 1457654
(43) Date de publication de la demande: 14.06.2017
(73) Titulaire: Guitton, Pascal, 31580 Loudet (FR)
(72) Inventeur: GENDRON, Kevin, F-35240 Retiers (FR); GUITTON, Pascal, F-31580 Loudet (FR)
(74) Mandataire: Cabinet BARRE LAFORGUE & associés
(86) Numéro de dépôt international: PCT/FR2015/052092
(87) Numéro de publication internationale: WO 2016/020604

(56) Documents cités:
- WO-A2-2012/065066
- US-A- 3 389 672
- US-A1- 2005 016 436
- US-A1- 2007 151 495

## Description

L'invention concerne un véhicule amphibie adapté pour pouvoir se déplacer sur l'eau et sur terre, en particulier un navire amphibie.

On connaît de nombreux véhicules amphibies permettant de se déplacer sur l'eau et sur la terre ferme en changeant de mode de déplacement. Ainsi, on connaît des véhicules tels que décrits par WO 2012/065066 qui sont des navires multicoques, notamment des catamarans, comprenant des jupes d'aéroglisseur pouvant être déployées autour des coques dudit navire. Ainsi un tel véhicule peut se déplacer sur l'eau comme un catamaran et sur l'eau ou sur terre comme un aéroglisseur.

Cependant, de tels véhicules ne sont pas adaptés à certains types de déplacements - notamment à certains cours d'eau. Plus particulièrement les vitesses de déplacement et la maniabilité d'un catamaran ne sont pas adaptées à certains cours d'eau sinueux et/ou étroits. Le document US 2005/0016436 A1 décrit un véhicule amphibie comportant un système de jupe.

En outre, le déploiement des jupes d'aéroglisseur est particulièrement complexe sur de tels véhicules. En effet, plusieurs jupes souples sont nécessaires pour pouvoir confiner une chambre d'air sous le véhicule. Plusieurs mécanismes de déploiement des jupes doivent donc être mis en œuvre. Le coût de fabrication et d'entretien d'un tel véhicule sont donc élevés.

En outre, les zones de jonctions entre jupes souples sont difficiles à concevoir et à fabriquer, et laissent toujours subsister des fuites d'air qui impactent l'efficacité de fonctionnement du véhicule en configuration d'aéroglisseur.

L'invention vise donc à pallier ces inconvénients.

L'invention vise à proposer un véhicule pouvant se déplacer selon une pluralité de modes de déplacement sur l'eau, et pouvant aussi se déplacer sur la terre ferme.

L'invention vise notamment à proposer un véhicule pouvant se déplacer à haute vitesse sur l'eau.

L'invention vise notamment à proposer un véhicule pouvant se déplacer à haute vitesse quel que soit son mode de déplacement.

L'invention vise en outre à proposer un véhicule conservant une excellente maniabilité et une excellente stabilité dans toute situation.

L'invention vise aussi à proposer un véhicule pouvant se déplacer dans des zones d'eaux profondes, dans des zones d'eau peu profonde - y compris des zones avec des rochers affleurant et/ou des plantes d'eau - ainsi que sur la terre ferme.

L'invention vise à proposer un véhicule dont l'impact sonore est minimal, tout en étant capable de se déplacer sur tout type de surface.

L'invention vise notamment aussi à proposer un véhicule pouvant fonctionner selon des modes de déplacement générant peu de nuisances sonores.

L'invention vise également à proposer un tel véhicule qui peut changer de mode de déplacement pendant son déplacement.

Dans tout le texte, le terme « carène » se réfère aux œuvres vives d'un véhicule se déplaçant sur l'eau, c'est-à-dire aux parties extérieures - notamment à la(aux) coque(s) - situées sous le niveau de l'eau.

Dans tout le texte, le terme « ligne de flottaison » se réfère à une ligne séparant les œuvresvives des œuvres mortes (situées au-dessus de l'eau) d'un véhicule. Elle se réfère notamment à une ligne arbitraire correspondant à la ligne de flottaison à une charge maximale déterminée arbitrairement comme charge maximale en fonction des caractéristiques - notamment structurelles - du véhicule.

De même, le terme « largeur à la flottaison » se réfère à la largeur du véhicule au niveau de sa ligne de flottaison. Notamment, l'expression est utilisée dans le sens de la largeur maximale d'un véhicule mesurée au niveau de la ligne de flottaison (c'est-à-dire d'une carène extrême bâbord à une carène extrême tribord dans le cas d'un navire multicoque). De même « longueur à la flottaison » se réfère à la longueur du véhicule au niveau de sa ligne de flottaison.

Le terme « bordé » se réfère à toutes les parties constituant la surface - notamment la(les) coque(s) - d'un véhicule. Les termes « murailles », « fonds », et « bouchains » correspondent à des zones du bordé :
- les « murailles » forment la partie latérale de la coque,
- les « fonds » (y compris les « petits fonds ») forment la partie la plus basse de la coque,
- les « bouchains » forment la zone intermédiaire entre les fonds et les murailles.

Le terme « étrave » se réfère à la zone située tout à l'avant d'une coque, à la jonction avant du bordé bâbord et du bordé tribord de la coque.

Le terme « carénage » est utilisé pour désigner le profil donné à un élément, notamment un élément de carrosserie tel qu'une coque, par exemple un profil aérodynamique ou hydrodynamique ; un tel élément est dit « caréné ».

Le terme « pavois » est utilisé pour une partie du véhicule - notamment une partie extérieure - prolongeant le bordé de coque au-dessus du niveau d'un pont principal du véhicule.

Le terme « largeur au fort » désigne la largeur maximale du véhicule (parfois aussi appelée « largeur hors membres»).

L'invention concerne donc un véhicule amphibie comprenant :
- au moins une coque présentant une proue, ladite proue étant terminée par une étrave,
- un dispositif de confinement d'une chambre d'air sous le véhicule comprenant au moins une jupe souple, ladite jupe souple présentant:
   - au moins une portion, dite portion de proue, située à la proue de ladite coque,
   - une première bordure, dite bordure supérieure,
   - une deuxième bordure, dite bordure inférieure, distincte de ladite bordure supérieure,
- un dispositif de déploiement de ladite jupe souple :
   - comprenant au moins une barre de maintien, rigide, à laquelle est au moins pour partie jointe la bordure inférieure de ladite portion de proue,
   - adapté pour pouvoir déplacer au moins la bordure inférieure de ladite portion de proue sous l'étrave entre :
      ❖ une position déployée de ladite jupe souple, dans laquelle ladite bordure inférieure est située plus bas que ladite bordure supérieure, de façon à permettre un gonflement de ladite jupe souple permettant de confiner au moins une chambre d'air sous le véhicule, et
      ❖ une position relevée de ladite jupe souple, dans laquelle ladite bordure inférieure est au-dessus d'une ligne de flottaison de la coque de façon à permettre à ladite coque d'assurer seule une flottaison du véhicule sur de l'eau, sans confinement de chambre d'air sous le véhicule par ladite jupe souple.

L'invention permet, pour la première fois, de proposer un navire comprenant au moins une étrave inclinée, tout en étant aussi adapté pour pouvoir fonctionner dans une configuration aéroglisseur. En effet, déployer une jupe souple au niveau de l'étrave d'un navire est particulièrement peu aisé, notamment lorsque l'étrave présente une forme inclinée, qu'elle soit convexe ou concave (à guibre), car la bordure inférieure doit avantageusement être déplacée sous l'étrave tout en étant, en position déployée, la plus proche possible de l'étrave, et de la coque.

En particulier, avantageusement et selon l'invention, le dispositif de déploiement permet de déployer la portion de proue en avant de la proue.

Or il est particulièrement avantageux d'avoir une jupe souple unique ceinturant le véhicule, par exemple pour limiter le nombre de bouches d'alimentation en air de ladite jupe souple.

Lorsque le véhicule comprend une coque unique, il est nécessaire, pour qu'il puisse fonctionner dans une configuration aéroglisseur, qu'une portion de proue d'une jupe souple soit déployée à la proue et au moins pour partie maintenue sous la proue (donc aussi sous l'étrave). Ainsi, avantageusement et selon l'invention, en position déployée, la bordure inférieure de la portion de proue de la jupe souple est située sous l'étrave, de façon à confiner une poche d'air dans la portion de proue de la jupe souple.

Avantageusement et selon l'invention, le véhicule comprend une unique coque, c'est-à-dire une seule carène. En effet, l'invention permet d'utiliser un navire monocoque dont l'étrave est inclinée et dont la largeur de la coque varie fortement sous la ligne de flottaison, en configuration aéroglisseur.

Néanmoins, l'invention s'applique à tout type de véhicule, monocoque ou multicoque. En effet, le passage de la jupe de proue sous des étraves de coques de multicoque est aussi permis par l'invention.

Ladite coque présente avantageusement une seule étrave. Ladite coque présente une forme bombée, notamment des fonds de forme bombée et/ou des bouchains de forme bombée.

Avantageusement et selon l'invention, le véhicule comprend une seule étrave, c'est-à-dire que la proue est de type monocoque. La proue s'amincit en direction de l'étrave.

Le véhicule, lorsque la jupe souple est relevée, est dans une configuration monocoque ou multicoque. En effet, seules la(les) coque(s) assure(nt) seule(s) la flottaison du véhicule sur de l'eau lorsque la jupe souple est en position relevée.

Un véhicule selon l'invention peut donc se déplacer comme un navire monocoque ou comme un véhicule aéroglisseur. Alternativement, un véhicule selon l'invention peut se déplacer comme un navire multicoque ou comme un véhicule aéroglisseur.

Ainsi, un véhicule selon l'invention bénéficie de la maniabilité et de la vitesse de déplacement d'un monocoque/multicoque sur des plans d'eau tels que des embouchures de fleuves, des lacs, des bords de mer, etc., et, le cas échéant, de la maniabilité d'un monocoque sur des cours d'eau étroits et/ou dans des remous et/ou sur des cours d'eau sinueux.

Cela permet une propulsion aquatique beaucoup plus discrète dans l'atmosphère qu'une propulsion aérienne. Cela permet aussi un déplacement rapide sur des surfaces aquatiques.

Par ailleurs, avantageusement et selon l'invention, ledit dispositif de confinement est adapté pour confiner au moins une chambre d'air sous la coque du véhicule.

Un véhicule selon l'invention peut donc aussi se déplacer dans une configuration aéroglisseur. Un véhicule selon l'invention bénéficie donc de l'accessibilité élargie offerte par un aéroglisseur pour accéder par exemple à des zones de faible profondeur d'eau, à des zones terrestres émergées (tels que des débarcadères) ou encore des zones où des plantes ou des rochers empêchent une navigation classique.

Ledit dispositif de déploiement est adapté pour pouvoir déplacer ladite bordure inférieure entre ladite position relevée et ladite position déployée, c'est-à-dire d'une position relevée à une position déployée ou d'une position déployée à une position relevée.

En position déployée la bordure inférieure de la jupe souple est maintenue plus bas que la bordure supérieure de la jupe souple.

Le dispositif de déploiement est plus particulièrement adapté pour pouvoir :
- maintenir ladite bordure inférieure en position déployée,
- maintenir ladite bordure inférieure en position relevée.

En particulier, le dispositif de déploiement est adapté pour pouvoir maintenir la bordure inférieure en position déployée, par exemple malgré le clapot des vagues contre ladite jupe souple gonflée.

La position relevée de ladite jupe souple est adaptée pour permettre à la coque d'assurer seule la flottaison du véhicule. Plus particulièrement, en position relevée, la jupe souple ne trempe pas dans l'eau. En position relevée, la jupe souple est en entier au-dessus de la ligne de flottaison. Ainsi, la jupe souple n'est, sauf remous importants, pas en contact avec l'eau lorsqu'elle est en position relevée. Cela évite que des mollusques ou des algues ne s'y développent et/ou qu'elle ne soit endommagée, par exemple par des objets flottants.

Avantageusement et selon l'invention :
- ladite jupe souple ceinture le véhicule,
- le dispositif de déploiement comprend une barre de maintien:
   - rigide,
   - ceinturant le véhicule,
   - mobile entre une position relevée et une position déployée,
   - à laquelle est jointe la bordure inférieure de ladite jupe souple.

Le véhicule comprend donc, dans certains modes de réalisation avantageux de l'invention une unique jupe souple.

Ladite bordure supérieure, en position déployée de ladite jupe souple, ceinture la coque au moins pour partie au niveau des murailles de la coque.

Ladite bordure inférieure, en position déployée de ladite jupe souple, ceinture la coque au moins pour partie au niveau des bouchains ou des fonds de la coque, avantageusement au niveau des bouchains.

Ladite jupe souple ceinture la coque du véhicule. Ainsi la jupe souple comprend une portion à la proue, une portion à bâbord, une portion à tribord et une portion à la poupe du véhicule.

Avantageusement et selon l'invention, la jupe souple est continue. La jupe souple entoure donc de façon continue la(les) coques du véhicule. En particulier, la jupe souple passe devant chaque proue du véhicule. Ainsi, en configuration aéroglisseur, un véhicule selon l'invention présente une jupe souple gonflée l'entourant entièrement, y compris devant la(les) proue(s) de(s) la coque(s) et/ou derrière la(les) poupe(s) de la de(s) la coque(s). Cela permet d'obtenir un véhicule, en mode aéroglisseur, avec une chambre d'air sous le véhicule parfaitement confinée.

Ladite jupe souple peut être formée en une pièce ou en plusieurs pièces jointes les unes aux autres.

Néanmoins, conformément à l'invention, dans certains modes de réalisation, le véhicule peut comprendre une portion de proue de jupe souple séparée d'une ou plusieurs autres portions de jupe souple. Chaque portion de jupe souple peut être déplacée entre une position relevée et une position déployée par des moyens distincts du dispositif de déploiement. Ainsi, sur un catamaran par exemple, rien n'empêche de déployer des portions latérales de jupe souple comme décrit dans WO2012/065066, et une portion de proue par une barre de maintien comme décrit ensuite.

La jupe souple est adaptée pour pouvoir être gonflée par une pression d'air supérieure à la pression atmosphérique. La jupe souple comprend une portion s'étendant entre ladite bordure supérieure et ladite bordure inférieure adaptée pour pouvoir être gonflée sous l'effet d'une différence de pression entre une face orientée vers l'intérieur du véhicule et une face orientée vers l'extérieur du véhicule.

Avantageusement et selon l'invention, la bordure supérieure de la jupe souple ceinture le véhicule. De même, avantageusement et selon l'invention la bordure inférieure de la jupe souple ceinture le véhicule. La bordure supérieure et la bordure inférieure de la jupe souple ceinturent ladite coque au plus près de ladite coque, avantageusement de façon à pouvoir former une poche d'air entre la coque et la jupe souple. Plus particulièrement avantageusement et selon l'invention, la bordure supérieure est jointe à ladite coque.

Ladite poche d'air dans la jupe souple est maintenue à une pression d'air supérieure à la pression atmosphérique de sorte que la jupe souple est gonflée. La jupe souple présente une longueur entre la bordure supérieure et la bordure inférieure, et une forme, adaptée pour que ladite poche étant à une pression supérieure à la pression atmosphérique, la jupe souple prend la forme d'un boudin. En particulier, la longueur de la jupe souple, entre la bordure supérieure et la bordure inférieure, est supérieure à la distance à laquelle ces deux bordures sont maintenues en position déployée.

Ainsi, lorsqu'elle est gonflée en position déployée, la jupe souple forme un boudin dont le point bas est au-dessous de la ligne de flottaison de la coque. En particulier le point le plus bas de ce boudin est au-dessous de la bordure inférieure. Ainsi, lorsqu'elle est gonflée, la jupe souple ceinturant ladite coque enferme au moins une chambre d'air sous ladite coque. La jupe souple est donc adaptée pour assurer le confinement d'une chambre d'air sous le véhicule.

Une alimentation en air sous pression de cette chambre d'air permet de créer un filet d'air sous le boudin ainsi formé, qui permet de maintenir ledit véhicule au-dessus d'un coussin d'air lui permettant de se déplacer sur toutes sortes de surfaces de déplacement (aquatique ou terrestre notamment) avec un très faible frottement. Il s'agit d'une configuration aéroglisseur du véhicule.

Avantageusement, en position déployée de la jupe souple, ladite bordure inférieure est maintenue par ledit dispositif de déploiement au-dessous de la ligne de flottaison de la coque.

Plus particulièrement, avantageusement et selon l'invention, en position déployée de la jupe souple, ladite bordure inférieure est maintenue à une hauteur adaptée pour que les points bas de la jupe souple soient au-dessous de la ligne de flottaison et plus particulièrement au-dessous de la quille (ou ligne de quille). Ainsi, en configuration aéroglisseur, la coque - y compris la quille (ou ligne de quille) - est entièrement au dessus de la surface de déplacement, notamment hors de l'eau sur une surface aquatique. Cela permet au véhicule d'avoir une hauteur, dite hauteur d'envol, suffisante par rapport à la surface de déplacement sur laquelle le véhicule se déplace lorsqu'il est en configuration d'aéroglisseur pour qu'aucune portion de la coque ne touche la surface de déplacement.

De plus, avantageusement et selon l'invention, ledit dispositif de déploiement est adapté pour pouvoir déplacer ladite bordure supérieure entre une position escamotée correspondant à une position relevée de ladite jupe souple, et une position déployée correspondant à une position déployée de ladite jupe souple.

En position déployée au moins une partie bâbord et au moins une partie tribord de ladite bordure supérieure sont plus éloignées de la coque qu'en position escamotée.

Cela permet d'augmenter la largeur au fort du véhicule lorsque la jupe est en position déployée. Ainsi, le véhicule est stable en configuration aéroglisseur. En effet, pour fonctionner dans une configuration aéroglisseur, ledit véhicule doit avoir une emprise au sol - notamment une largeur - importante pour assurer sa stabilité, tandis que la coque unique doit présenter une surface, notamment une largeur la plus petite possible pour procurer un bon coefficient de glissement hydrodynamique dans l'eau.

Avantageusement et selon l'invention, le dispositif de déploiement est adapté pour, en position déployée de ladite jupe souple, maintenir ladite bordure inférieure au moins pour partie le long de ladite coque.

Plus particulièrement, dans certains modes de réalisation avantageux de l'invention, en position déployée de la jupe souple, la bordure inférieure est au moins pour partie maintenue contre la coque, notamment plaquée contre la coque. Ainsi une relative étanchéité est maintenue entre ladite bordure inférieure et ladite coque, de façon à pouvoir contenir une poche d'air dans ladite jupe souple à une pression plus élevée que la pression atmosphérique environnante, de façon à ce que la jupe souple puisse former un boudin.

En position déployée, ladite bordure inférieure de la jupe souple comprend au moins une partie le long de l'étrave de la coque.

Le dispositif de déploiement est adapté pour maintenir ladite bordure inférieure de ladite jupe souple au moins pour partie le long de ladite coque, en particulier contre la partie avant de la coque, notamment le long de l'étrave. Le dispositif de déploiement est notamment adapté pour, en position déployée de la jupe souple, maintenir la bordure inférieure de la portion de proue le long de la proue. Plus particulièrement la barre de maintien est adaptée pour maintenir la bordure inférieure de la portion de proue le long de la coque en position déployée.

Pour la première fois, l'invention permet de réaliser un véhicule présentant une configuration monocoque à carène unique très hydrodynamique, et qui peut néanmoins fonctionner dans une configuration aéroglisseur, tout en restant stable en configuration aéroglisseur.

En particulier, un véhicule selon l'invention permet un déplacement rapide en configuration de type monocoque, grâce à une coque adaptée pour un déplacement à haute vitesse sur l'eau, ce qui implique notamment une coque en V permettant un déjaugeage et/ou très carénée, et une étrave inclinée.

Avantageusement le rapport de la longueur à la flottaison sur la largeur à la flottaison d'une coque de véhicule selon l'invention est supérieur à 2, notamment avantageusement supérieur à 2.5 et plus particulièrement supérieur à 3.

Plus particulièrement, avantageusement et selon l'invention, le dispositif de déploiement est adapté pour pouvoir maintenir ladite bordure inférieure en position par rapport à ladite coque, dans une deuxième position déployée de ladite jupe souple, distincte d'une première position déployée de ladite jupe souple, ladite bordure inférieure étant maintenue à une hauteur distincte dans la deuxième position déployée de la hauteur à laquelle elle est maintenue dans ladite première position déployée.

Dans la deuxième position déployée de la jupe souple, la bordure inférieure est maintenue à une hauteur par rapport à la coque distincte de la hauteur par rapport à la coque à la laquelle elle est maintenue dans la première position déployée.

Chaque position déployée de la jupe souple est adaptée pour permettre un gonflement de ladite jupe souple permettant de confiner au moins une chambre d'air sous le véhicule.

Plusieurs positions déployées dans lesquelles la bordure inférieure de la jupe souple est à une hauteur différente permettent de faire varier la hauteur d'envol du véhicule. Cela permet notamment d'adapter la hauteur de la chambre d'air située sous le véhicule à la surface sur laquelle le véhicule se déplace. Ainsi la hauteur d'envol du véhicule peut être différente sur un cours d'eau présentant des rochers affleurant ou sur un terrain lisse.

Le dispositif de déploiement comprend au moins une barre de maintien, rigide, à laquelle au moins une partie de ladite bordure inférieure de la jupe souple est jointe.

La barre de maintien est montée mobile entre une position relevée et une position déployée, ladite position relevée de la barre de maintien correspondant à la position relevée de la jupe souple, ladite position déployée de la barre de maintien correspondant à une position déployée de la jupe souple.

La barre de maintien ceinture avantageusement le véhicule. Ainsi, le dispositif de déploiement comprend avantageusement une unique barre de maintien.

Ainsi, la barre de maintien assure le maintien en position déployée de la bordure inférieure de la jupe souple et le déplacement entre position déployée et position relevée de la bordure inférieure de la jupe souple.

Ladite barre de maintien assure le maintien de la forme de la bordure inférieure de la jupe souple.

Avantageusement et selon l'invention, au moins une portion avant de ladite barre de maintien est mobile en hauteur par rapport à la coque entre ladite position relevée et ladite position déployée. Ainsi, la barre de maintien est adaptée pour pouvoir déplacer au moins la bordure inférieure de la portion de proue entre la position relevée et une position déployée de la jupe souple.

Ladite barre de maintien assure le maintien en position de la bordure inférieure de la jupe souple, notamment en position relevée ou en position déployée.

Ladite barre de maintien présente une forme adaptée pour pouvoir être, en position déployée, le long de ladite coque, de façon à maintenir la bordure inférieure de la jupe souple le long de ladite coque.

Ladite barre de maintien est avantageusement en une pièce, pour pouvoir déplacer la bordure inférieure de l'ensemble de la jupe souple simultanément. Néanmoins, rien n'empêche, conformément à l'invention que le dispositif de déploiement comprenne une pluralité de barres de maintien, ladite pluralité de barres de maintien ceinturant le véhicule. En particulier, rien n'empêche que de prévoir que la barre de maintien soit divisée en plusieurs portions successives.

Avantageusement et selon l'invention, ladite coque présentant une proue terminée par une étrave, ladite barre de maintien est articulée par rapport à la coque de façon à pouvoir déplacer au moins une portion de ladite jupe souple située à la proue, sous l'étrave entre une position relevée et une position déployée.

L'étrave est inclinée, c'est-à-dire qu'elle n'est pas verticale. L'étrave est avantageusement inclinée avec une extrémité supérieure située plus haute et plus en avant que son extrémité inférieure, c'est-à-dire qu'il s'agit d'une étrave classique et non pas d'une étrave inversée.

Avantageusement et selon l'invention, ladite barre de maintien est articulée par rapport à la coque de façon à pouvoir déplacer la bordure inférieure d'au moins la portion de proue de la jupe souple sous l'étrave entre la position relevée et la position déployée.

Avantageusement et selon l'invention, ladite barre de maintien est articulée par rapport à la coque par au moins une bielle de façon à pouvoir déplacer la bordure inférieure d'au moins la portion de proue de la jupe souple sous l'étrave entre la position relevée et la position déployée.

Cela permet, en position déployée, de prévoir un maintien de la bordure inférieure de la portion de proue de la jupe souple contre l'étrave par ledit dispositif de déploiement. Ainsi une chambre d'air sous le véhicule est mieux confinée. De même la poche d'air formée par la portion de proue de la jupe souple est mieux fermée.

Ladite barre de maintien est avantageusement articulée à la coque par une pluralité de bielles. En particulier, ladite barre de maintien est articulée à l'avant du véhicule par une paire de bielles (avantageusement une bielle avant bâbord et une bielle avant tribord) de façon à pouvoir passer sous au moins une bordure supérieure de l'étrave jusqu'à une position déployée de la jupe souple.

Ladite barre de maintien est articulée à l'avant du véhicule de façon à pouvoir décrire un arc de cercle sous l'étrave de la coque, sans contact avec ladite étrave au moins jusqu'à la position déployée. Ladite barre de maintien est articulée à l'avant du véhicule de façon à pouvoir décrire sous l'étrave de la coque un arc de cercle de rayon inférieur au rayon moyen de l'étrave.

Ladite barre de maintien est en outre articulée à l'arrière du véhicule par une paire de bielles (avantageusement une bielle arrière bâbord et une bielle arrière tribord) de façon à pouvoir déplacer une portion de jupe souple située à la poupe dans une position déployée au moins pour partie contre la poupe de la coque. Néanmoins, ladite barre de maintien peut être articulée par rapport à la coque par d'autres moyens, par exemple par une paire de bielles à l'avant et par une glissière à l'arrière, permettant de relever/déployer la portion de proue de la jupe souple. D'autres moyens peuvent être envisagés, par exemple une glissière inclinée à l'avant, et une paire de bielles à l'arrière, etc.

Ladite barre de maintien est articulée par rapport à la coque de façon à ce qu'une portion avant de ladite barre de maintien puisse être déplacée sous l'étrave de la coque d'une position relevée à une position déployée avant qu'une portion arrière de ladite barre de maintien puisse être déplacée vers la poupe de la coque d'une position relevée à une position déployée.

Par ailleurs, la jupe souple comprend avantageusement des orifices de vidanges, adaptés pour permettre à de l'eau emprisonnée dans la jupe souple de sortir de ladite jupe souple, par exemple sous l'effet d'un flux et/ou d'une pression d'air injecté dans ladite jupe souple, ou sous l'effet de la gravité.

En outre, en position relevée ladite jupe souple est à une hauteur prédéterminée au-dessus de la ligne de flottaison de la coque, adaptée pour pouvoir protéger la jupe souple du clapot de l'eau autour de la coque, y compris lorsque la coque se déplace sur l'eau.

Avantageusement, un véhicule selon l'invention comprend en outre au moins un logement d'escamotage de la jupe souple en position relevée.

En particulier, ladite coque comprend au moins un logement d'escamotage de la jupe souple en position relevée. Ladite coque comprend dans lesdites murailles un ou plusieurs logements d'escamotage de la jupe souple en position relevée.

En position relevée, ladite jupe souple est avantageusement escamotée dans le ou les logements d'escamotage.

La jupe souple est ainsi protégée lorsqu'elle est en position relevée.

Avantageusement, un véhicule selon l'invention comprend au moins une porte d'escamotage adaptée pour pouvoir ouvrir et fermer au moins un logement d'escamotage de la jupe souple dans la coque.

Ainsi, en position relevée, ladite jupe souple est avantageusement enfermée dans un logement d'escamotage.

Plus particulièrement le véhicule comprend une pluralité de portes d'escamotage adaptées pour pouvoir ouvrir et fermer au moins un logement d'escamotage d'au moins une jupe souple. Chaque porte d'escamotage est mobile entre une position fermée dans laquelle au moins un logement d'escamotage est au moins pour partie fermé et une position ouverte d'ouverture dans laquelle au moins un logement d'escamotage est ouvert.

Lorsque chaque porte d'escamotage est en position ouverte, chaque logement d'escamotage est ouvert de façon à permettre le déploiement de ladite jupe souple.

Plus particulièrement un véhicule selon l'invention comprend au moins une porte d'escamotage sur chaque bord, c'est-à-dire une porte sur tribord et une porte sur bâbord. Un véhicule selon l'invention comprend avantageusement une pluralité de portes sur chaque bord, c'est-à-dire au moins deux portes sur bâbord et au moins deux portes sur tribord.

Plus particulièrement, une muraille bâbord de la coque comprend au moins une porte d'escamotage adaptée pour pouvoir ouvrir et fermer un logement d'escamotage dans ladite coque.

De même, une muraille tribord de la coque comprend au moins une porte d'escamotage adaptée pour pouvoir ouvrir et fermer un logement d'escamotage dans ladite coque.

En outre un véhicule selon l'invention comprend avantageusement au moins une porte d'escamotage située dans la proue de la coque.

Avantageusement, le véhicule comprend un unique logement d'escamotage s'étendant dans la coque sur tout un côté bâbord de la coque, à la proue de la coque et tout un côté tribord de la coque. Ledit logement d'escamotage est fermé par une pluralité de portes d'escamotage dont au moins une porte d'escamotage bâbord, au moins une porte d'escamotage tribord et au moins une porte d'escamotage de proue.

La(les) portes du(des) logement(s) d'escamotage sont adaptées pour protéger la jupe souple située dans un logement d'escamotage, de l'eau - notamment du clapot-, du soleil, d'agressions chimiques ou mécaniques (par exemple par frottement contre des arbustes, des rochers), ou des agressions animales ou humaines.

Chaque porte d'escamotage, lorsqu'elle est fermée, constitue pour partie le bordé de la coque. Chaque porte d'escamotage, lorsqu'elle est fermée, fait partie des œuvres vives et/ou des œuvres mortes de la coque du véhicule. Plus particulièrement chaque porte d'escamotage constitue au moins une partie des murailles de la coque.

En outre, chaque porte d'escamotage est avantageusement montée pivotante autour d'un axe de pivotement. Chaque porte d'escamotage est avantageusement reliée par une ou plusieurs charnières à la coque du véhicule. L'axe de pivotement est avantageusement disposé à proximité d'une bordure supérieure (en position fermée) de ladite porte, de façon à permettre à ladite porte de s'ouvrir vers le haut pour pouvoir libérer la jupe souple vers le bas. Chaque porte d'escamotage présente donc un bord libre opposé à un bord situé le long de l'axe de pivotement, ledit bord libre étant éloigné des autres portions de la coque lorsque ladite porte d'escamotage est ouverte.

Au moins une partie de la bordure supérieure de la jupe souple est jointe à au moins une porte de logement d'escamotage. Plus particulièrement, la bordure supérieure des portions bâbord et tribord au moins de la jupe souple sont jointes auxdites portes d'escamotage respectivement bâbord et tribord.

La jupe souple présente une bordure supérieure au moins pour partie jointe à distance de l'axe de pivotement de chaque porte d'escamotage. Plus particulièrement, la bordure supérieure de la jupe souple est jointe à au moins une porte d'escamotage à proximité d'un bord libre de ladite porte d'escamotage.

Ainsi, la jupe souple (notamment des portions bâbord et tribord de la jupe souple) est, en position déployée, tenue à distance de la coque.

En configuration aéroglisseur chaque porte d'escamotage est ouverte et la jupe souple est dans une position déployée. En configuration monocoque chaque porte d'escamotage est fermée et la jupe souple est en position relevée dans le(s) logement(s) d'escamotage.

Ainsi, en configuration aéroglisseur, la largeur au fort du véhicule est plus importante que la largeur au fort du véhicule en configuration monocoque.

La bordure inférieure de la jupe souple est jointe à ladite barre de maintien. Ladite barre de maintien est distincte desdites portes d'escamotage.

Ainsi la bordure inférieure et la bordure supérieure de la jupe souple sont jointes à des parties mécaniques du véhicule distinctes et mobiles entre elles.

Par ailleurs, un véhicule selon l'invention comprend en outre un dispositif d'alimentation en air adapté pour pouvoir gonfler ladite jupe souple.

En particulier, ledit dispositif d'alimentation est adapté pour pouvoir gonfler la jupe souple, ladite jupe souple étant en position déployée. Ledit dispositif d'alimentation en air est donc adapté pour pouvoir injecter de l'air dans la jupe souple à une pression supérieure à la pression atmosphérique.

De même, ledit dispositif d'alimentation en air est adapté pour pouvoir injecter de l'air dans la chambre d'air sous le véhicule, à une pression supérieure à la pression atmosphérique.

Le dispositif d'alimentation en air est adapté pour pouvoir créer un flux d'air.

Avantageusement et selon l'invention, ledit dispositif d'alimentation en air comprend :
- au moins une soufflerie, dite soufflerie principale, adaptée pour mettre de l'air en mouvement de façon à former un flux d'air,
- des conduites d'alimentation en air adaptées pour guider ledit flux d'air vers ladite jupe souple.

Conformément à l'invention, ladite jupe souple peut être compartimentée de façon à présenter plusieurs compartiments séparés par des parois. Le dispositif d'alimentation en air comprend avantageusement au moins une conduite d'alimentation en air pour chaque compartiment de ladite jupe souple.

Ladite jupe souple comprend au moins une ouverture, entre ladite bordure supérieure et ladite bordure inférieure, adaptée pour, ladite bordure inférieure étant en position déployée, recevoir un flux d'air de ladite soufflerie. Ladite jupe souple comprend au moins une ouverture pour chaque compartiment.

Ledit dispositif d'alimentation en air comprend en outre des conduites d'air adaptées pour guider ledit flux d'air vers ladite jupe souple et/ou au moins une chambre d'air sous le véhicule.

Ledit dispositif d'alimentation comprend avantageusement en outre au moins une deuxième soufflerie, dite soufflerie secondaire, adaptée pour, indépendamment de la première soufflerie, mettre de l'air en mouvement de façon à former un flux d'air. Le flux d'air de cette soufflerie secondaire peut être utilisé pour gonfler au moins pour partie ladite jupe souple et alimenter - via la jupe souple - ladite chambre d'air située sous le véhicule de façon à former un coussin d'air sous le véhicule.

De plus, la jupe souple présente avantageusement des ouvertures débouchant dans un espace situé sous le véhicule , de façon à permettre à l'air délivré par ledit dispositif d'alimentation en air dans ladite jupe souple de circuler dans la jupe souple puis d'être injecté dans la chambre d'air située sous le véhicule.

Par ailleurs, avantageusement, un dispositif selon l'invention comprend un dispositif de propulsion subaquatique et un dispositif de propulsion aérienne.

Ainsi, un véhicule selon l'invention peut avantageusement être propulsé uniquement par ledit dispositif de propulsion subaquatique lorsqu'il est dans une configuration de monocoque/multicoque. Ce mode de propulsion est avantageusement plus silencieux qu'un mode de propulsion aérien, de sorte qu'il permet de diminuer les nuisances sonores - par exemple sur des axes de circulation fluviale, pour des riverains des berges ou des coteaux.

Le dispositif de propulsion subaquatique est avantageusement caréné dans la coque. Avantageusement et selon l'invention, le dispositif de propulsion subaquatique comprend un hydrojet.

En revanche, un véhicule selon l'invention est avantageusement propulsé uniquement par ledit dispositif de propulsion aérienne lorsqu'il est dans une configuration d'aéroglisseur. En effet, la coque est avantageusement hors de l'eau lorsque le véhicule est dans une configuration d'aéroglisseur, de sorte que le dispositif de propulsion subaquatique est inefficace dans cette configuration.

Cependant, rien n'empêche d'utiliser ledit dispositif de propulsion aérienne dans une configuration monocoque/multicoque du véhicule, en combinaison avec le dispositif de propulsion subaquatique, ou seul.

En effet, il peut être avantageux d'utiliser le dispositif de propulsion aérienne seul en configuration monocoque/multicoque sur des surfaces de déplacement particulières telles que par exemple des plans d'eau avec très peu de fond, des plans d'eau avec beaucoup d'algues ou de plantes d'eau, des plans d'eau où vivent des animaux subaquatiques protégés, etc.

Avantageusement et selon l'invention, le dispositif de propulsion aérienne comprend au moins une hélice à air motorisée. L'hélice est avantageusement entourée d'un carénage.

Avantageusement et selon l'invention, le dispositif de propulsion aérienne comprend aussi au moins un gouvernail adapté pour pouvoir diriger un flux d'air créé par ladite hélice, de façon à pouvoir guider le véhicule.

L'invention concerne également un véhicule amphibie caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique en perspective d'un véhicule selon un mode de réalisation conforme à l'invention, dans une configuration monocoque,
- la figure 2 est une représentation schématique en perspective d'un véhicule conforme à la figure 1, dans une configuration aéroglisseur,
- la figure 3 est une représentation schématique partielle en vue de côté tribord d'un véhicule conforme aux figures 1 et 2, dans une configuration monocoque,
- la figure 4 est une représentation schématique partielle en vue de côté tribord d'un véhicule conforme aux figures 1 à 3, lors d'un changement de configuration d'une configuration monocoque à une configuration aéroglisseur,
- la figure 5 est une représentation schématique partielle en vue de côté tribord d'un véhicule conforme aux figures 1 à 4, dans une configuration aéroglisseur,
- la figure 6 une représentation schématique d'une moitié tribord en vue de face d'un véhicule conforme aux figures 1 à 5, dans une configuration aéroglisseur.

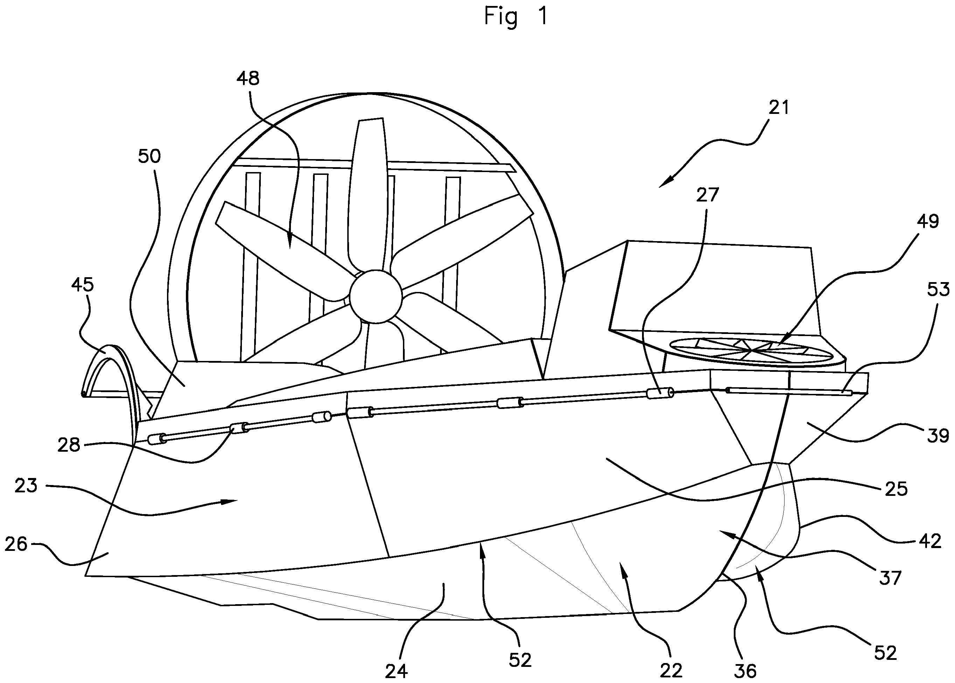

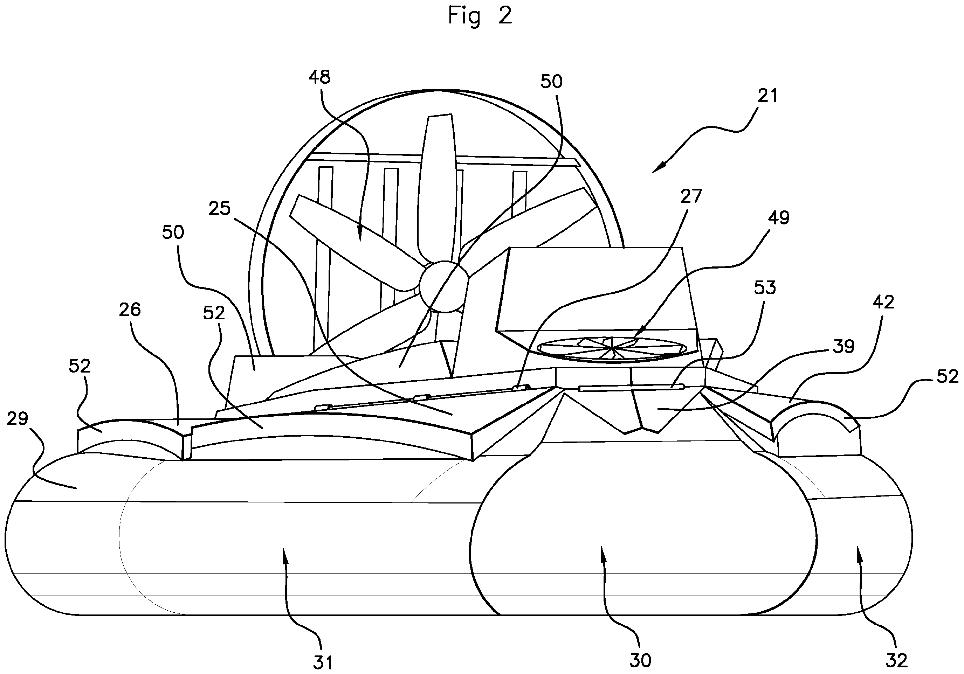

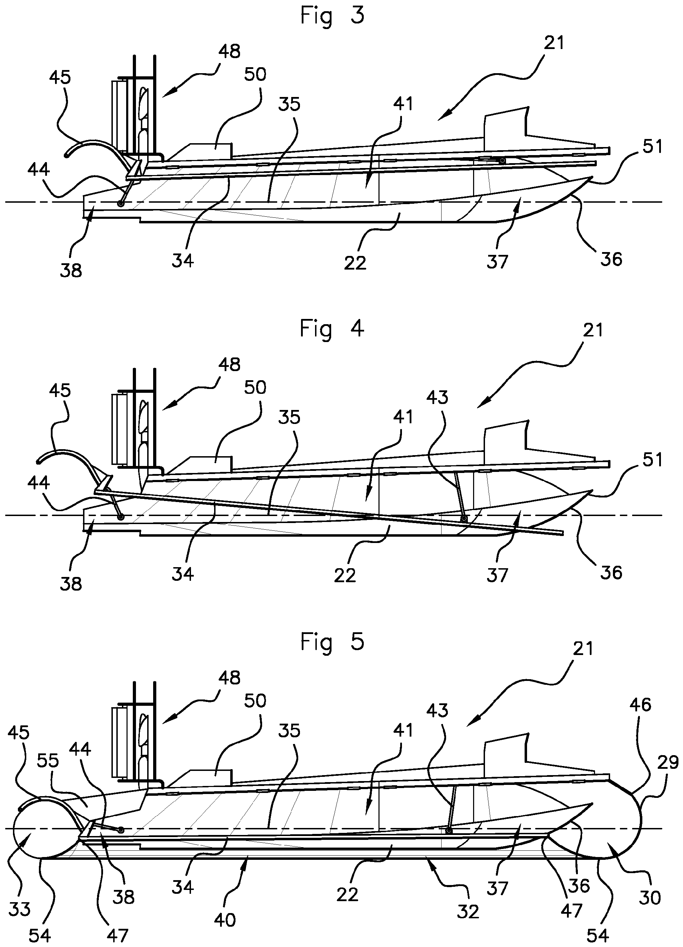

Le véhicule 21 amphibie présenté en figures 1 à 6 est un navire amphibie pouvant se déplacer sur l'eau dans une configuration monocoque (cf. figures 1 et 3) ou dans une configuration aéroglisseur (cf. figures 2 et 5), et sur terre dans ladite configuration aéroglisseur.

Le véhicule 21 comprend une coque 22 permettant d'assurer sa flottaison sur de l'eau, douce ou salée. La ligne de flottaison 35 du véhicule est représentée aux figures 3 à 5 sur ladite coque 22.

Pour se déplacer dans l'eau en configuration monocoque, un véhicule 21 selon l'invention comprend une propulsion aquatique comprenant un ou plusieurs hydrojets (non représentés). Chaque hydrojet est avantageusement caréné dans la coque 22.

La coque présente une proue 37 à l'avant, une poupe 38 à l'arrière, un bordé tribord et un bordé bâbord. La proue se termine à l'avant par une étrave 36 mince ou se rejoignent les bordés bâbord et tribord de la coque. L'étrave 36 est inclinée, c'est-à-dire qu'elle est plus large au niveau du pont qu'au niveau de la ligne de flottaison. Dans l'exemple présenté, l'étrave 36 est convexe.

La coque présente des fonds 24 et des murailles 23.

La coque est carénée pour pouvoir se déplacer rapidement. Ainsi elle présente avantageusement une largeur d'environ 2,4m pour une longueur d'environ 8m dont une longueur à la flottaison de 7m. Un tel véhicule est par exemple adapté pour transporter environ 12 personnes.

Les murailles sont principalement formées par des portes d'escamotage en position fermée. En particulier, la muraille tribord comprend deux portes d'escamotage tribord 25, 26. La muraille comprend en outre une porte d'escamotage 39 de proue, située à la proue 37 de la coque 22. La muraille bâbord comprend deux portes d'escamotage bâbord 42, dont une est représentée en figure 2. Les murailles 23 sont formées par les surfaces principales desdites portes d'escamotage 25, 26, 39, 42.

Les portes d'escamotage sont reliées par des charnières 27, 28 au reste de la coque, notamment à proximité d'un pavois de la coque. Chaque porte d'escamotage est articulé le long d'un axe de pivotement entre une position fermée telle que représentée en figure 1, et une position ouverte telle que représentée en figure 2. En position fermée, lesdites portes d'escamotage 25, 26, 39, 42 ferment un logement d'escamotage 41 adapté pour pouvoir loger au moins une jupe souple 29.

En position fermée, lesdites portes d'escamotage 25, 26, 39, 42 assurent une protection de la jupe souple 29 escamotée dans le logement d'escamotage 41.

Lesdites portes d'escamotage 25, 26, 39, 42 présentent chacune un bord libre 52 situé à l'opposé d'un bord articulé au reste de la coque 22 par les charnières 27, 28, 53. En position fermée desdites portes d'escamotage 25, 26, 39, 42 les bords libres 52 forment un bouchain vif entre les fonds 24 et lesdites murailles 23 de la coque 22.

Afin de faciliter la représentation d'un véhicule selon l'invention, aux figures 3, 4 et 5, les portes d'escamotage 25, 26, 39, 42 ne sont pas représentées.

Ladite jupe souple 29 est adaptée pour pouvoir être escamotée dans le logement d'escamotage 41 dans une position relevée (cf. figure 1) et pour pouvoir être déployée et gonflée sous forme de boudin dans une position déployée (cf. figure 2).

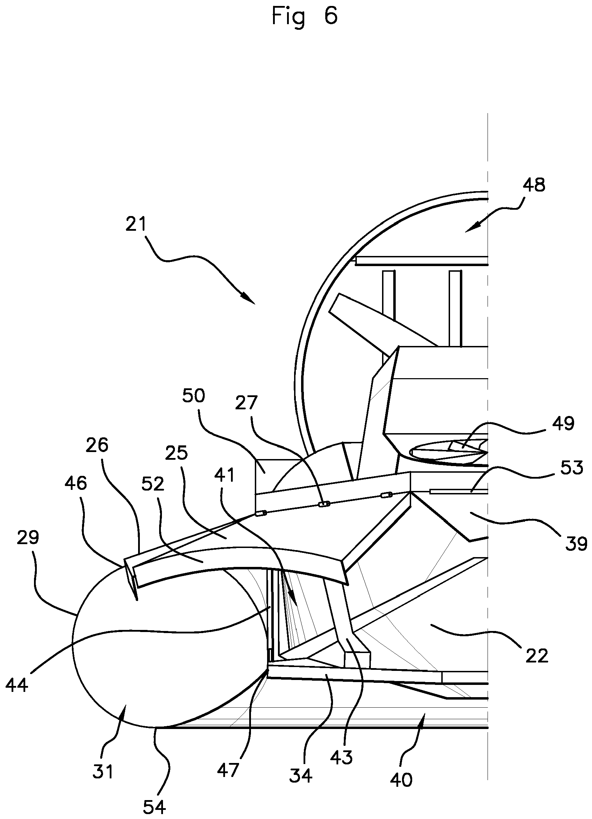

Afin de faciliter la représentation d'un véhicule selon l'invention, aux figures 3 et 4 la jupe souple 29 n'est pas représentée, et aux figures 5 et 6 la jupe souple est représentée en coupe.

Ladite jupe souple 29 ceinture la coque 22. En particulier la jupe souple 29 présente une portion de proue 30, une portion tribord 31, une portion bâbord 32 et une portion de poupe 33. Elle entoure donc entièrement ladite coque 22 et peut, en position déployée et gonflée, former un boudin continu à la périphérie de ladite coque 22.

En position déployée, la portion de proue 30 est déployée en avant de la proue 37.

De même, en position déployée, la portion de poupe 33 est déployée en arrière de la poupe 38.

Le véhicule 21, et plus particulièrement la coque 22 est ainsi entièrement entourée par la jupe souple 29 lorsque celle-ci est en position déployée. Cela permet à un véhicule selon l'invention de parfaitement confiner une chambre d'air sous le véhicule, sans jupe souple additionnelle au niveau de la proue et/ou de la poupe.

En outre, lorsque la jupe souple 29 est en position déployée et gonflée, le point bas 54 du boudin ainsi formé est situé plus bas que la ligne de flottaison 35. La jupe souple 29 peut ainsi confiner une chambre d'air 40 sous la coque 22.

Une bordure, dite bordure supérieure 46, de la jupe souple 29 est jointe à la coque 22. En particulier ladite bordure supérieure 46 de la jupe souple 29 est jointe aux portes d'escamotage 25, 26, 39, 42, à proximité des bords libres 52. La bordure supérieure 46 de la jupe souple 29 est jointe tout autour de la coque 22 de façon étanche à l'air. Par exemple la bordure supérieure 46 est pincée de façon étanche entre deux pièces de la coque, au moins sur les bords bâbord et tribord et à la proue.

Une bordure, dite bordure inférieure 47, de la jupe souple 29 est jointe à une barre de maintien 34 d'un dispositif de déploiement. Ladite bordure inférieure 47 de la jupe souple 29 est jointe à ladite barre de maintien. Par exemple la bordure inférieure 47 forme une ganse dans laquelle la barre de maintien 34 est passée.

Ladite barre de maintien 34 s'étend tout autour de la coque 22. Ladite barre de maintien 34 est rigide, par exemple réalisée à section carrée, en acier inoxydable ou en matériau composite à fibres de carbone. La barre de maintien 34 est en une seule pièce.

La barre de maintien 34 est articulée par rapport à la coque 22 de façon à pouvoir déplacer la bordure inférieure 47 de la jupe souple 29 d'une position relevée représentée à la figure 3 à une position déployée représentée à la figure 5. La barre de maintien 34 est adaptée pour maintenir la bordure inférieure 47 de la jupe souple 29 en position déployée.

La position de la barre de maintien 34 en position relevée est adaptée pour que la jupe souple 29 puisse être enfermée dans le logement d'escamotage 41 lors de la fermeture des portes d'escamotage 25, 26, 39, 42 sans gêner la fermeture desdites portes d'escamotage.

La barre de maintien 34 est articulée à la coque 22 de façon à pouvoir, entre une position relevée et une position déployée de la jupe souple, déplacer la bordure inférieure 47 de la portion de proue 30 de la jupe souple 29 sous l'étrave 36. En effet, en position relevée, la bordure inférieure 47 de la portion de proue 30 est située plus en avant qu'en position déployée.

Plus particulièrement, la barre de maintien 34 est articulée à la coque 22 de façon à pouvoir, entre une position relevée et une position déployée de la jupe souple 29, déplacer la bordure inférieure 47 de la portion de proue 30 au-delà d'un éperon entre le logement d'escamotage 41 et l'étrave 36. En effet, le logement d'escamotage 41 est avantageusement formé en creux dans la coque 22, de sorte que son rebord forme avec la coque 22 un éperon au niveau de l'étrave 36 lorsque la porte d'escamotage 39 de proue est en position ouverte (cf. figures 3 et 4). Cela permet aussi de s'assurer que la portion de proue 30 de la jupe souple est à l'intérieur du logement d'escamotage 41 en position relevée.

En outre, cela est d'autant plus avantageux dans les modes de réalisation comme celui ici présenté, dans lesquels le bord libre de la porte d'escamotage 39 de proue ne forme pas de bouchain vif, c'est-à-dire qu'elle est, en position fermée dans le prolongement de l'étrave 36 (cf. figure 1).

Le dispositif de déploiement comprend au moins deux paires de bielles 43,44 permettant d'articuler la barre de maintien 34 par rapport à ladite coque. Une première paire de bielles 43 est située dans une moitié avant du véhicule 21. La paire de bielles 43 avant est adaptée pour pouvoir déplacer la barre de maintien 34 à l'avant de la proue 37 de la coque 22. Plus particulièrement la longueur et la disposition des bielles 43 avant sont adaptées pour permettre à une portion avant de la barre de maintien 34 de se déplacer sous l'étrave 36 de la coque 22 entre une position relevée et une position déployée, comme cela est représenté en figure 4. Le point de fixation des bielles 43 avant à la coque 22 est disposé au-dessus ou au même niveau, et à l'arrière du point de fixation à la barre de maintien 34 lorsque celle-ci est en position relevée.

Le dispositif de déploiement - et plus particulièrement chaque paire de bielles 43, 44 - est adapté pour déplacer la portion avant de la barre de maintien 34 au-delà d'un éperon 51 formé par le bord intérieur du logement d'escamotage 41 et l'étrave 36. Plus particulièrement, le dispositif de déploiement est adapté pour actionner les bielles 43, 44 de façon que, pour passer d'une position relevé à une position déployée, la portion avant de la barre de maintien 34 se déplace d'abord d'arrière en avant au-delà dudit éperon 51, puis vers le bas en-dessous de l'étrave 36. Une portion arrière de la barre de maintien 34 est ensuite déplacée au-dessus de la poupe 38, vers l'arrière, de sorte que, simultanément, la portion avant de la barre de maintien 34 est ramenée contre l'étrave 36. La portion arrière de la barre de maintien 34 vient se placer à l'arrière de la poupe 38, avantageusement le long ou contre la poupe 38.

Une deuxième paire de bielles 44 est située dans une moitié arrière du véhicule 21. La paire de bielles 44 arrière est adaptée pour pouvoir déplacer la barre de maintien 34 à l'arrière de la poupe 38 de la coque 22. Plus particulièrement, la longueur et la disposition des bielles 44 arrière sont adaptés pour permettre à une portion arrière de la barre de maintien 34 de se déplacer au-dessus de la poupe 38 de la coque 22 entre une position relevée et une position déployée, comme représentée en figure 4. Le point de fixation des bielles 44 arrière à la coque 22 est disposé au-dessous et à la verticale ou en arrière du point de fixation à la barre 34 lorsque celle-ci est en position relevée.

Plus particulièrement l'articulation de la barre de maintien 34 à la coque 22 est adaptée pour permettre à la portion avant de la barre de maintien 34 de se déplacer sous l'étrave 36 de la coque 22 entre une position relevée et une position déployée sans contact avec la coque 22, et plus particulièrement sans contact avec l'étrave 36. Néanmoins ladite barre de maintien 34 est, en position déployée, avantageusement le long de la coque, le cas échéant au contact de la coque 22 (y compris de l'étrave 36). L'articulation de la barre de maintien 34 à la coque 22 est adaptée pour permettre à la portion arrière de la barre de maintien 34 de se déplacer au-dessus de la poupe 38 de la coque 22 entre une position relevée et une position déployée sans contact avec la coque 22. En position déployée, ladite barre de maintien peut être au contact de la poupe 38.

Le dispositif de déploiement comprend en outre une motorisation permettant de déplacer la jupe souple 29 entre une position déployée et une position relevée. En particulier, le dispositif de déploiement comprend un ou plusieurs moteurs d'actionnement des bielles 43, 44 d'articulation de la barre de maintien 34.

En position déployée, ladite barre de maintien 34 est avantageusement le long de la coque 22, notamment le long des fonds 24 de la coque 22, sous la ligne de flottaison 35. La barre de maintien 34 présent une forme adaptée pour pouvoir être, en position déployée, le plus proche possible de la coque 22, de façon à maintenir la bordure inférieure 47 de la jupe souple 29 le long de la coque 22. Ainsi la jupe souple 29 ferme un espace le long de la coque 22 entre sa bordure supérieure 46 et sa bordure inférieure 47, de sorte que lorsque la jupe souple 29 et gonflée par un dispositif d'alimentation en air, celle-ci présente la forme d'un boudin ceinturant le véhicule. Les points bas 54 du boudin ainsi formé sont donc en dessous de la ligne de flottaison 35, notamment en dessous des fonds 24 de la coque 22, et plus particulièrement en dessous du point le plus bas de la coque 22. Une chambre d'air 40 est ainsi confinée sous la coque 22.

En outre, le véhicule 21 comprend une propulsion aérienne comprenant un dispositif de propulsion aérienne 48 comprenant une hélice motorisée et des gouvernails pour pouvoir diriger le véhicule. L'hélice est avantageusement entourée d'un carénage.

Le véhicule 21 comprend un dispositif d'alimentation en air 49, 50 adapté pour pouvoir créer un flux d'air et le conduire jusque dans la jupe souple 29 de façon à la gonfler sous la forme d'un boudin comme représenté en figure 5 et 6. Le dispositif d'alimentation en air 49, 50 comprend une première soufflerie 50 située à l'arrière du véhicule et une deuxième soufflerie 49 située à l'avant du véhicule, chacune adaptée pour produire un flux d'air à une pression supérieure à la pression atmosphérique.

Les jupes souples présentent des entrées d'admission d'air adaptées pour recevoir de l'air dudit dispositif d'alimentation en air.

Dans l'exemple présenté, la soufflerie arrière 50 est adaptée pour injecter de l'air dans deux manches 55 souples, une manche souple à bâbord et une manche souple 55 à tribord, qui s'étendent chacune d'une bouche de sortie d'air de la soufflerie arrière 50 jusqu'à la portion de poupe 33 de la jupe souple 29 de façon à recevoir un flux d'air créé par ladite soufflerie arrière 50 et à le guider vers la portion de poupe 33 de la jupe souple. Un flux d'air s'engouffre ainsi dans chaque manche 55 de façon à maintenir la jupe souple 29 gonflée, comme représenté en figure 5.

La soufflerie avant 49 est reliée à la portion de proue 30 de la jupe souple 29 par des conduites d'air de façon à pouvoir y injecter de l'air.

Dans le dispositif d'alimentation en air 49, 50, la soufflerie avant 49 et la soufflerie arrière 50 fonctionnent de concert pour gonfler la jupe souple 29 et alimenter la chambre d'air 40 en air à une pression supérieure à la pression atmosphérique.

De l'air sous pression peut s'écouler entre la barre de maintien 34 et la coque 22 de façon à alimenter ladite chambre d'air 40. C'est pourquoi il n'est pas nécessaire que la barre de maintien 34 soit jointe contre la coque 22 de façon étanche en position déployée. La jupe souple 29 comprend en outre avantageusement des ouvertures (non représentées) permettant à l'air sous pression injecté dans ladite jupe souple 29 d'y circuler puis de s'écouler vers la chambre d'air 40 sous la coque 22.

La jupe souple 29 est gonflée sous l'effet de la différence de pression entre l'air délivré par le dispositif d'alimentation en air et l'air à pression atmosphérique à l'extérieur du véhicule 21.

En configuration aéroglisseur telle que représentée aux figures 2, 5 et 6, de l'air s'écoule entre la chambre d'air 40 et l'atmosphère sous les points bas 54 du boudin formé par la jupe souple 29.

Le dispositif d'alimentation en air est adapté pour fournir un débit d'air suffisant pour pouvoir maintenir ledit véhicule sur un coussin d'air.

Un véhicule 21 selon l'invention peut ainsi se déplacer sur un coussin d'air, sans contact entre la coque et la surface sur laquelle le véhicule 21 se déplace.

La portion de poupe 33 de la jupe souple 29 est maintenue en position, notamment en position déployée, par une mâchoire 45, de façon ne pas être déplacée par le flux d'air créé par l'hélice du dispositif de propulsion aérienne 48.

Dans certains modes de réalisation, la barre de maintien 34 - et par conséquent la bordure inférieure 47 de la jupe souple 29 - peut être déplacée dans deux positions déployées distinctes à des hauteurs différentes le long de la coque 22. Ainsi la hauteur d'envol du véhicule mesurée entre les points bas 54 de la jupe souple 29 à l'état gonflé et la ligne de flottaison 35 est variable : le véhicule 21 présente, en configuration aéroglisseur, de hauteur d'envol distincte. Cela permet d'adapter la hauteur d'envol au type de surface pratiquée. Ainsi une hauteur d'envol faible peut être suffisante pour un déplacement à la surface de l'eau, sans endommagement de la coque 22, tandis qu'une hauteur d'envol plus élevé peut être nécessaire pour un déplacement sur une surface terrestre pour ne pas endommager les fonds 24 et/ou une quille de la coque 22.

L'invention peut faire l'objet de nombreuses autres variantes de réalisation non représentées.

Contrairement au mode de réalisation particulier présenté ci-dessus, dans certains modes de réalisation de l'invention, le véhicule est multicoque.

Rien n'empêche de prévoir plus de deux positions déployées pour ladite jupe souple à des hauteurs différentes pour permettre un réglage fin de la hauteur d'envol du véhicule en configuration aéroglisseur.

Dans certains modes de réalisation, une membrane souple permet d'assurer une étanchéité à l'air entre la jupe souple et la coque, notamment entre la bordure supérieure de la jupe souple et la coque.

De plus, rien n'empêche de prévoir sous la jupe souple, une jupe de protection de ladite jupe souple, ladite jupe de protection ceinturant la chambre d'air de façon à permettre d'augmenter la hauteur d'envol du véhicule et ainsi à protéger la jupe souple en l'éloignant de la surface de déplacement du véhicule.

## Revendications

1. Véhicule (21) amphibie comprenant :
- au moins une coque (22) présentant une proue (37), ladite proue (37) étant terminée par une étrave (36),
- un dispositif de confinement d'une chambre d'air sous le véhicule comprenant au moins une jupe souple (29), ladite jupe souple (29) présentant:
• au moins une portion, dite portion de proue (30), située à la proue (37) de ladite coque (22),
• une première bordure, dite bordure supérieure (46),
• une deuxième bordure, dite bordure inférieure (47), distincte de ladite bordure supérieure (46),
- un dispositif de déploiement de ladite jupe souple (29), **caractérisé en ce que** ledit dispositif de déploiement de ladite jupe souple (29) :
• comprend au moins une barre de maintien (34), rigide, à laquelle est au moins pour partie jointe la bordure inférieure (47) de ladite portion de proue (30),
• est adapté pour pouvoir déplacer au moins la bordure inférieure (47) de ladite portion de proue (30) sous l'étrave (36) entre :
❖ une position déployée de ladite jupe souple (29), dans laquelle ladite bordure inférieure (47) est située plus bas que ladite bordure supérieure (46), de façon à permettre un gonflement de ladite jupe souple (29) permettant de confiner au moins une chambre d'air (40) sous le véhicule (21), et
❖ une position relevée de ladite jupe souple (29), dans laquelle ladite bordure inférieure (47) est au-dessus d'une ligne de flottaison (35) de la coque (22) de façon à permettre à ladite coque (22) d'assurer seule une flottaison du véhicule (21) sur de l'eau, sans confinement de chambre d'air sous le véhicule (21) par ladite jupe souple (29).

2. Véhicule selon la revendication 1, **caractérisé en ce que** ledit dispositif de déploiement est adapté pour pouvoir déplacer ladite bordure supérieure (46) entre une position escamotée correspondant à une position relevée de ladite jupe souple (29), et une position déployée correspondant à une position déployée de ladite jupe souple.

3. Véhicule selon l'une des revendications 1 ou 2, **caractérisé en ce que** le dispositif de déploiement est adapté pour, en position déployée de ladite jupe souple (29), maintenir ladite bordure inférieure (47) au moins pour partie le long de ladite coque (22).

4. Véhicule selon l'une des revendications 1 à 3, **caractérisé en ce que** :
- ladite jupe souple (29) ceinture le véhicule (21),
- le dispositif de déploiement comprend au moins une barre de maintien (34) :
• rigide,
• ceinturant le véhicule (21),
• mobile entre une position relevée et une position déployée,
• à laquelle est jointe la bordure inférieure (47) de ladite jupe souple.

5. Véhicule selon l'une des revendications 1 à 4, **caractérisée en ce que** le dispositif de déploiement est adapté pour pouvoir maintenir ladite bordure inférieure (47) en position par rapport à ladite coque (22), dans une deuxième position déployée de ladite jupe souple (29), distincte d'une première position déployée de ladite jupe souple (29), ladite bordure inférieure (47) étant maintenue à une hauteur distincte dans la deuxième position déployée de la hauteur à la laquelle elle est maintenue dans ladite première position déployée.

6. Véhicule selon l'une des revendications 1 à 5, **caractérisé en ce que** au moins une portion avant de ladite barre de maintien (34) est mobile en hauteur par rapport à la coque (22) entre ladite position relevée et ladite position déployée.

7. Véhicule selon l'une des revendications 1 à 6, **caractérisé en ce que**, ladite barre de maintien (34) est articulée par rapport à la coque (22) de façon à pouvoir déplacer la bordure inférieure (47) d'au moins la portion de proue (30) de la jupe souple (29) sous l'étrave (36) entre la position relevée et la position déployée.

8. Véhicule selon l'une des revendications 1 à 7, **caractérisé en ce qu'**il comprend en outre au moins un logement d'escamotage (41) de la jupe souple (29) en position relevée.

9. Véhicule selon l'une des revendications 1 à 8, **caractérisé en ce qu'**il comprend en outre un dispositif d'alimentation en air (49, 50) adapté pour pouvoir gonfler ladite jupe souple (29).

10. Véhicule selon l'une des revendications 1 à 9, **caractérisé en ce qu'**il comprend un dispositif de propulsion subaquatique et un dispositif de propulsion aérienne (48).

## Patentansprüche

1. Amphibienfahrzeug (21), umfassend:
- mindestens einen Rumpf (22), der einen Bug (37) aufweist, wobei der Bug (37) mit einem Steven (36) endet,
- eine Einschlussvorrichtung einer Luftkammer unter dem Fahrzeug, umfassend mindestens eine elastische Schürze (29), wobei die elastische Schürze (29) aufweist:
• mindestens einen Abschnitt, bezeichnet als Bugabschnitt (30), der sich am Bug (37) des Rumpfes (22) befindet,
• einen ersten Rand, bezeichnet als oberer Rand (46),
• einen zweiten Rand, bezeichnet als unterer Rand (47), der sich vom oberen Rand (46) unterscheidet,
- eine Aufblähvorrichtung der elastischen Schürze (29), **dadurch gekennzeichnet, dass** die Aufblähvorrichtung der elastischen Schürze (29):
• mindestens eine starre Haltestange (34) umfasst, an welcher mindestens teilweise der untere Rand (47) des Bugabschnitts (30) angebracht ist,
• geeignet ist, um mindestens den unteren Rand (47) des Bugabschnitts (30) unter dem Steven (36) zu verlagern zwischen:
❖ einer aufgeblähten Position der elastischen Schürze (29), in welcher sich der untere Rand (47) niedriger als der obere Rand (46) befindet, so dass ein Anschwellen der elastischen Schürze (29) möglich ist, das erlaubt, mindestens eine Luftkammer (40) unter dem Fahrzeug (21) einzuschließen, und
❖ einer angehobenen Position der elastischen Schürze (29), in welcher der untere Rand (47) über einer Wasserlinie (35) des Rumpfes (22) ist, so dass es dem Rumpf (22) erlaubt ist, allein ein Schwimmen des Fahrzeugs (21) auf dem Wasser ohne Luftkammereinschluss unter dem Fahrzeug (21) durch die elastische Schürze (29) zu gewährleisten.

2. Fahrzeug nach Anspruch 1, **dadurch gekennzeichnet, dass** die Aufblähvorrichtung geeignet ist, den oberen Rand (46) zwischen einer eingezogenen Position, die einer angehobenen Position der elastischen Schürze (29) entspricht, und einer aufgeblähten Position, die einer aufgeblähten Position der elastischen Schürze entspricht, verlagern zu können.

3. Fahrzeug nach einem der Ansprüche 1 oder 2, **dadurch gekennzeichnet, dass** die Aufblähvorrichtung geeignet ist, in aufgeblähter Position der elastischen Schürze (29) den unteren Rand (47) mindestens teilweise entlang des Rumpfes (22) zu halten.

4. Fahrzeug nach einem der Ansprüche 1 bis 3, **dadurch gekennzeichnet, dass**:
- die elastische Schürze (29) das Fahrzeug (21) umgibt,
- die Aufblähvorrichtung mindestens eine Haltestange (34) umfasst:
• die starr ist,
• die das Fahrzeug (21) umgibt,
• die zwischen einer angehobenen Position und einer aufgeblähten Position beweglich ist,
• an welcher der untere Rand (47) der elastischen Schürze angebracht ist.

5. Fahrzeug nach einem der Ansprüche 1 bis 4, **dadurch gekennzeichnet, dass** die Aufblähvorrichtung geeignet ist, den unteren Rand (47) in Position in Bezug auf den Rumpf (22) in einer zweiten aufgeblähten Position der elastischen Schürze (29) halten zu können, die sich von einer ersten aufgeblähten Position der elastischen Schürze (29) unterscheidet, wobei der untere Rand (47) in einer Höhe in der zweiten aufgeblähten Position gehalten wird, die sich von der Höhe unterscheidet, in welcher sie in der ersten aufgeblähten Position gehalten wird.

6. Fahrzeug nach einem der Ansprüche 1 bis 5, **dadurch gekennzeichnet, dass** mindestens ein vorderer Abschnitt der Haltestange (34) in Bezug auf den Rumpf (22) zwischen der angehobenen Position und der aufgeblähten Position in der Höhe beweglich ist.

7. Fahrzeug nach einem der Ansprüche 1 bis 6, **dadurch gekennzeichnet, dass** die Haltestange (34) in Bezug auf den Rumpf (22) derart angelenkt ist, dass der untere Rand (47) von mindestens dem Bugabschnitt (30) der elastischen Schürze (29) unter dem Steven (36) zwischen der angehobenen Position und der aufgeblähten Position verlagerbar ist.

8. Fahrzeug nach einem der Ansprüche 1 bis 7, **dadurch gekennzeichnet, dass** es ferner mindestens eine Einzugaufnahme (41) der elastischen Schürze (29) in angehobener Position umfasst.

9. Fahrzeug nach einem der Ansprüche 1 bis 8, **dadurch gekennzeichnet, dass** es ferner eine Luftversorgungsvorrichtung (49, 50) umfasst, die geeignet ist, die elastische Schürze (29) anschwellen lassen zu können.

10. Fahrzeug nach einem der Ansprüche 1 bis 9, **dadurch gekennzeichnet, dass** es eine Unterwasser-Antriebsvorrichtung und eine oberirdische Antriebsvorrichtung (48) umfasst.

## Claims

1. Amphibious vehicle (21) comprising:
- at least one shell (22) having a prow (37), said prow (37) being ended with a bow (36),
- a device for confining an air chamber under the vehicle comprising at least one flexible sleeve (29), said flexible sleeve (29) having:
• at least one portion, called prow portion (30), located at the prow (37) of said shell (22),
• a first edge, called upper edge (46),
• a second edge, called lower edge (47), separate from said upper edge (46),
- a device for deploying said flexible sleeve (29), **characterised in that** said device for deploying said flexible sleeve (29):
• comprises at least one rigid retention bar (34), to which is at least partially fixed the lower edge (47) of said prow portion (30),
• is adapted to be able to move at least the lower edge (47) of said prow portion (30) under the bow (36) between:
❖ a deployed position of said flexible sleeve (29), wherein said lower edge (47) is located lower than said upper edge (46), so as to make it possible for an inflation of said flexible sleeve (29) making it possible to confine at least one air chamber (40) under the vehicle (21), and
❖ a raised position of said flexible sleeve (29), wherein said lower edge (47) is above a floating line (35) of the shell (22) so as to make it possible for said shell (22) to ensure one single floating of the vehicle (21) on the water, without confining the air chamber under the vehicle (21) by said flexible sleeve (29) .

2. Vehicle according to claim 1, **characterised in that** said deployment device is adapted to be able to move said upper edge (46) between a retracted position corresponding to a raised position of said flexible sleeve (29), and a deployed position corresponding to a deployed position of said flexible sleeve.

3. Vehicle according to one of claims 1 or 2, **characterised in that** the deployment device is adapted to, in the deployed position of said flexible sleeve (29), retain said lower edge (47) at least partially along said shell (22).

4. Vehicle according to one of claims 1 to 3, **characterised in that**:
- said flexible sleeve (29) girdles the vehicle (21),
- the deployment device comprises at least one retention bar (34):
• that is rigid,
• girdling the vehicle (21),
• mobile between a raised position and a deployed position,
• to which is fixed the lower edge (47) of said flexible sleeve.

5. Vehicle according to one of claims 1 to 4, **characterised in that** the deployment device is adapted to be able to retain said lower edge (47) in position with respect to said shell (22), in a second deployed position of said flexible sleeve (29), separate from a first deployed position of said flexible sleeve (29), said lower edge (47) being retained at a separate height in the second deployed position of the height to which it is retained in said first deployed position.

6. Vehicle according to one of claims 1 to 5, **characterised in that** at least one front portion of said retention bar (34) is mobile at height with respect to the shell (22) between said raised position and said deployed position.

7. Vehicle according to one of claims 1 to 6, **characterised in that** said retention bar (34) is hinged with respect to the shell (22) so as to be able to move the lower edge (47) of at least the prow portion (30) of the flexible sleeve (29) under the bow (36) between the raised position and the deployed position.

8. Vehicle according to one of claims 1 to 7, **characterised in that** it further comprises at least one retraction housing (41) of the flexible sleeve (29) in the raised position.

9. Vehicle according to one of claims 1 to 8, **characterised in that** it further comprises a device for supplying air (49, 50), adapted to be able to inflate said flexible sleeve (29).

10. Vehicle according to one of claims 1 to 9, **characterised in that** it comprises an underwater propulsion device and an air propulsion device (48).
